# DEMANDE DE BREVET EUROPEEN

(11) **EP 1 059 219 A1**
(43) Date de publication de la demande: **13.12.2000**
(21) Numéro de dépôt: 00420109.1
(22) Date de dépôt: 23.05.2000
(51) Int. Cl.: B62D 15/02

(54) **Capteur de position pour direction de véhicule automobile**

(30) Priorité: 11.06.1999 FR 9907644
(71) Demandeur: Société de Mécanique d'Irigny, 69540 Irigny (FR)
(72) Inventeur: Reynard, Bruno, 69008 Lyon (FR)
(74) Mandataire: Bratel, Gérard

(57) **Abrégé**

Ce capteur (14) indique, directement ou par calcul, la position angulaire de la colonne de direction. Il est intégré dans le carter (4) d'une direction à crémaillère (9) et, plus particulièrement, disposé avec sa cible (15) du côté du carter (4) tourné vers la colonne de direction et/ou le volant.

Utilisations : directions assistées, systèmes d'aide à la conduite.

## Description

La présente invention concerne un capteur de position pour direction de véhicule automobile, c'est-à-dire un capteur indiquant directement ou par calcul la position angulaire de la colonne de direction, autrement dit la position angulaire du volant. L'invention concerne aussi bien les directions manuelles que les directions assistées de véhicules.

Sur les véhicules automobiles, il est de plus en plus nécessaire de disposer, à tout instant, d'une information sous forme de signal électrique, indiquant la position angulaire instantanée de la colonne de direction. Cette information permet de piloter un système d'assistance à la direction ou, plus généralement, tout système d'aide à la conduite.

Un capteur d'angle classique, installé sur la colonne de direction d'un véhicule automobile, nécessite un montage spécial avec fixation qui est coûteux, et qui nécessite un réglage soigneux. Il est aussi difficile de rendre un tel montage étanche. De plus, étant placé sur la colonne de direction qui peut subir une certaine torsion, un tel capteur ne fournit pas une indication exacte de la position réelle du volant.

Par le document EP 0 856 720 A1, on connaît déjà un capteur de position pour direction de véhicule automobile qui est intégré dans le carter d'une direction à crémaillère. Le capteur angulaire, de type magnétique, se situe ici à l'extrémité de la colonne de direction, du côté opposé au volant et, plus particulièrement, dans le prolongement du pignon lié à la colonne de direction et venant en prise avec la crémaillère.

Bien qu'il permette d'éviter certains inconvénients des capteurs classiques, ce dispositif conserve des insuffisances. En particulier, la localisation du capteur dans le prolongement du pignon conduit à un encombrement important : le carter doit être agrandi, et le pignon doit être allongé, pour recevoir le capteur. De plus, dans le cas d'une direction avec barre de torsion élastique, un capteur ainsi disposé ne fournit une information représentative de la position angulaire réelle du volant qu'avec retard, et une incertitude peut se produire.

La présente invention vise à éviter tous les inconvénients précédemment exposés, en fournissant une solution qui, tout en assurant la protection du capteur et un montage aisé et économique de celui-ci, résoud le problème d'encombrement ici posé et garantit l'exactitude de l'information de position délivrée.

A cet effet, l'invention a pour objet un ensemble capteur de position pour direction de véhicule automobile, cet ensemble capteur étant intégré dans le carter d'une direction à crémaillère, et le capteur proprement dit étant disposé, avec la cible correspondante, du côté du carter tourné vers la colonne de direction et/ou le volant.

Ainsi, l'invention propose un ensemble capteur intégré au carter de direction, mais situé, dans ce carter, du côté opposé à celui préconisé par le document EP 0 856 720 A1 précité. Grâce à cette disposition, il n'est plus nécessaire d'augmenter l'encombrement du carter de direction pour loger le capteur, et le pignon ou son arbre ne nécessitent plus d'être prolongés. De plus, le capteur est mis en position protégée, dans une zone étanche. Par ailleurs, le capteur peut être fixé de façon simple et à un coût minime, et il ne nécessite aucun réglage lors de son montage. Enfin, dans le cas d'une direction assistée hydraulique avec valve à barre de torsion, la position du capteur selon la présente invention garantit l'exactitude de l'information de position fournie.

L'invention sera de toute façon mieux comprise à l'aide de la description qui suit, en référence au dessin schématique annexé représentant, à titre d'exemple, une forme d'exécution de ce capteur de position pour direction de véhicule automobile :
Figure 1 est une vue d'ensemble d'une direction de véhicule automobile, équipée d'un capteur conforme à la présente invention ;
Figure 2 est une vue en coupe transversale du carter de la direction de la figure 1, montrant la disposition du capteur.

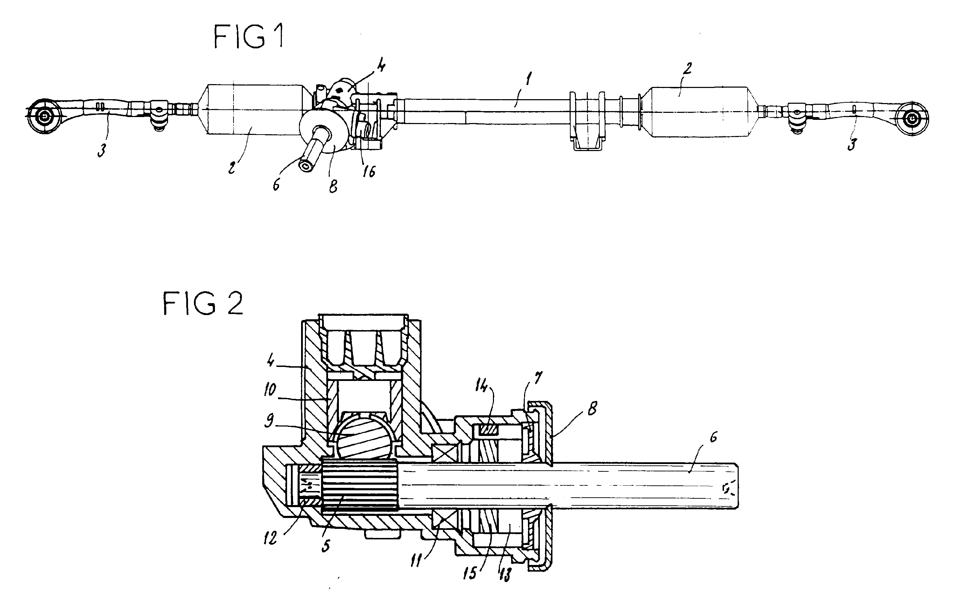

La figure 1 représente extérieurement une direction à crémaillère de véhicule automobile, dont elle montre le corps tubulaire 1, les soufflets 2 et les boîtiers côté roue 3, ainsi que le carter 4, plus particulièrement concerné par la présente invention, auquel est raccordée la colonne de direction, donc le volant (ici non représentés).

Le carter 4, représenté en coupe sur la figure 2, renferme un pignon rotatif 5 dont l'arbre 6 sort dudit carter 4, en traversant un joint d'étanchéité 7 recouvert par un cache-poussière 8, la partie extérieure de l'arbre 6 étant accouplée à la colonne de direction. Le pignon 5 vient en prise avec une crémaillère 9, pressée contre ce pignon 5 par un poussoir 10. L'ensemble formé par ce pignon 5 et par son arbre 6 est monté tournant, dans le carter 4, par l'intermédiaire d'un roulement 11 et d'un palier d'extrémité 12.

Entre le roulement 11 et le joint d'étanchéité 7, le carter 4 délimite, autour de l'arbre 6 du pignon 5, une chambre annulaire 13 dans laquelle est monté, en position fixe vers la périphérie de cette chambre 13, un capteur 14 tel qu'un capteur à effet Hall. Le capteur 14 coopère avec une partie complémentaire mobile dite "cible" 15, montée autour de l'arbre 6 et liée en rotation avec cet arbre 6. Le capteur 14 avec sa cible 15 sont ainsi disposés dans le capteur 4, du côté de ce carter 4 tourné vers la colonne de direction et/ou le volant. Ce capteur 14 permet d'obtenir, directement ou par calcul, une indication de la position angulaire instantanée de l'arbre 6, donc de la colonne de direction. Le carter 4 présente encore, latéralement, une partie protubérante 16 (voir figure 1) prévue pour le raccordement des conducteurs électriques qui permettent de prélever le signal issu du capteur 14 et représentant la position angulaire de l'arbre 6, ou permettant la détermination de cette position par le calcul.

Le capteur de position 14, ainsi disposé avec sa cible 15, n'augmente pas l'encombrement de la direction dans le véhicule. De plus, cet ensemble ne nécessite pas de protection d'étanchéité spécifique pour la cible 15, la protection utilisée étant celle protégeant classiquement le pignon 5. Enfin, dans le cas d'une direction avec barre de torsion, le capteur 14 fournit une information exacte de la position du volant, à tout moment.

Le capteur de position 14, précédemment décrit, fournit directement ou par calcul, sous forme de signal électrique, une information représentative de la position angulaire de la colonne de direction, information qui permet notamment de piloter une direction électrique, ou de piloter un groupe électro-pompe d'une direction assistée hydraulique ; le capteur peut aussi piloter un système d'aide à la conduite, tel qu'un système d'anti-dérapage de véhicule.

L'on ne s'éloignerait pas du cadre de l'invention, telle que définie dans les revendications annexées :
- en utilisant tout type de capteur : optique, à effet Hall, à réluctance variable, ou tout autre moyen permettant de déterminer directement ou par calcul une position angulaire et/ou un mouvement angulaire ;
- en montant la cible, dans la position préconisée, soit directement autour du pignon ou de son arbre, soit autour de toute autre pièce coaxiale au pignon et liée en rotation avec ce dernier ;
- en appliquant l'invention, et plus particulièrement le capteur, à tout type de direction, manuelle ou assistée, quelle que soit l'utilisation faite de l'information de position délivrée par le capteur.

## Revendications

1. Ensemble capteur de position pour direction de véhicule automobile, indiquant directement ou par calcul la position angulaire de la colonne de direction, l'ensemble capteur étant intégré dans le carter (4) d'une direction à crémaillère (9), caractérisé en ce que le capteur proprement dit (14) est disposé, avec la cible (15) correspondante, du côté du carter (4) tourné vers la colonne de direction et/ou le volant.

2. Ensemble capteur de position selon la revendication 1, caractérisé en ce que la cible (15) est montée directement autour du pignon (5) ou de son arbre (6).

3. Ensemble capteur de position selon la revendication 2, caractérisé en ce qu'il est monté dans une chambre annulaire (13) délimitée par le carter (4), autour de l'arbre (6) du pignon (5), entre un roulement (11) et un joint d'étanchéité (7), traversé par ledit arbre (6) à sa sortie du carter (4).

4. Utilisation du capteur de position selon l'une quelconque des revendications 1 à 3 dans une direction assistée, l'information issue du capteur (14) pilotant une direction assistée électrique, ou pilotant le groupe électro-pompe d'une direction assistée hydraulique.

5. Utilisation du capteur de position selon l'une quelconque des revendications 1 à 3 pour le pilotage d'un système d'aide à la conduite, tel qu'un système d'anti-dérapage de véhicule.
